# EUROPEAN PATENT SPECIFICATION

(11) **EP 2 965 124 B1**
(45) Date of publication and mention of the grant of the patent: **20.11.2019**
(21) Application number: 13773425.7
(22) Date of filing: 14.03.2013
(51) Int. Cl.: G01M 5/00

(54) **A SYSTEM AND METHOD FOR EVALUATING A DAM STATE**
SYSTEM UND VERFAHREN ZUR KONTROLLE EINES DAMMZUSTANDS
SYSTÈME ET PROCÉDÉ POUR ÉVALUER UN ÉTAT DE BARRAGE

(43) Date of publication of application: 13.01.2016
(73) Proprietor: Siemens Aktiengesellschaft, 80333 München (DE)
(72) Inventor: MANGUTOV, Oleg Vladimirovich, Pushkin 196601 (RU); MOKHOV, Ilya Igorevich, St.Petersburg 192281 (RU); PYAYT, Alexander Leonidovich, St.Petersburg 198207 (RU); SHEVCHENKO, Denis Vladimirovich, St.Petersburg 195269 (RU)
(74) Representative: Isarpatent
(86) International application number: PCT/RU2013/000196
(87) International publication number: WO 2014/142701

(56) References cited:
- US-A1- 2010 036 618
- US-A1- 2012 146 802
- HASSANI ET AL: "Application of nondestructive evaluation techniques on concrete dams", INTERNATIONAL JOURNAL OF ROCK MECHANICS AND MINING SCIENCES, PERGAMON, UNITED KINGDOM, vol. 34, no. 3-4, 1 April 1997 (1997-04-01), pages 125.e1-125.e11, XP005684407, ISSN: 1365-1609

## Description

The invention relates to a method and a system for evaluating a dam state, in particular a dam state of a water dam.

Dams are mostly provided for protecting land against flooding. Flooding due to natural disasters such as hurricanes and earthquakes can result in severe loss of life and property. The climate change increases the risk of dike failures. Dams which are generally used as barriers against impounding water or underground streams are widely used. Hereinafter, flood-gates, levees and/or dikes are generally referred to as dams.

During maintenance of dams, particular interest is directed towards the prevention of dam failures. Such dam failures are potentially catastrophic if the structure of the dam is breached or significantly damaged.

Routine deformation monitoring is useful to anticipate any structural damages and to permit remedial action to be taken before structural failure of the dam occurs. Evaluation of the stability of a dam is mostly done by inspection or observation. Dams are mostly inspected by persons trained to detect deformities of failures of the inspected dike body. In a visual inspection it is however not possible to detect hidden damages within the dike structure, which are for instance caused by water which flows beneath the surface. This can create cavities that can lead to a general dam weakness of the water dam.

A conventional approach based on observing a dam is remote monitoring using a laser or photo technology. With this conventional method it is possible to detect abnormal warps in the dike body geometry. However, there is still the disadvantage that this method does not allow detecting hidden internal damages to the dike body, either.

A further known approach is to use sensor networks with sensors on or inside the dam body. Some of the sensors can be installed inside the dike body. Various sensors can be applied to gain measurement values with various types of physical parameters. This conventional approach has, however, the disadvantage that it requires the deployment of sensors not only on the surface of the dam but also inside the dike body of the dam. By drilling and installation of the sensors within the dike body the dike structure is weakened. Moreover, the sensors deployed within the dike structure cannot be transferred easily to another dam to be monitored.

A further conventional approach is to perform geological exploration and surveying. Experts are supplied with detailed information about the dike body. However, this approach requires essential human involvement in a data collection process and is very time-consuming.

All the conventional approaches of dam monitoring listed above have as a further common disadvantage that they are locked-in to each particular monitored dam and are not able to flexibly use results of monitoring results of other dams of the same or similar type in the same or other regions. Accordingly, this valuable information is not used leading to not reliable prediction results of the respectively monitored dam.

The following prior art documents reflect some of the above mentioned techniques for evaluating a dam state of a dam.

| | |
|---|---|
| D1 | HASSANI ET AL: "Application of nondestructive evaluation techniques on concrete dams", INTERNATIONAL JOURNAL OF ROCK MECHANICS AND MINING SCIENCES, PERGAMON, UNITED KINGDOM, vol. 34, no. 3-4, 1 April 1997 (1997-04-01), pages 125.e1-125.e11, XP005684407, ISSN: 1365-1609 |
| | |
| D2 | US 2012/146802 A1 (ABERCROMBIE ROBERT K [US] ET AL) 14 June 2012 (2012-06-14) |
| | |
| D3 | US 2010/036618 A1 (MATHEWS V JOHN [US] ET AL) 11 February 2010 (2010-02-11) |

Document D1 discloses a dam evaluation system and method for evaluating a dam as defined with the preamble features a) and b) of claim 1 and claim 3, respectively. Documents D2 and D3 disclose further evaluation systems where in particular D3 also suggests to compare measured results with some historic results of the same dam. However, they inherently possess the above described disadvantages as they are not very accurate and do not deliver reliable evaluation results because the analysis is only done with respect to one dam.

Accordingly, it is an object of the present invention to provide a method and a system for evaluating a dam state of a dam providing more reliable evaluation results.

This object is achieved by a dam evaluation system comprising the features of claim 1.

The present invention provides a dam evaluation system for evaluating a dam state of a dam, wherein said dam evaluation system comprises at least one mobile dam monitoring unit adapted to exert excitations to a monitored dam and to transfer excitation response parameters of the dam measured by sensors deployed at the monitored dam to an analytical center of said dam evaluation system having an evaluation unit adapted to compare the received excitation response parameters of the monitored dam with historic evaluation response parameters of the same dam and with historic excitation response parameters of a selected set of similar dams stored in databases of said dam evaluation system.

Accordingly, the dam evaluation system according to the present invention can use common information spaces and thus possesses the availability of usage data from various dams. The present invention provides a distributed dam evaluation system for evaluating a dam state of a dam taking into account not only the historic evaluation response parameters of the same monitored dam but also historic excitation response parameters of a selected set of similar dams stored in databases of the dam evaluation system. Accordingly, the dam evaluation system makes use of a broader database and can provide more accurate evaluation results.

In a possible embodiment of the dam evaluation system according to the present invention, the dam monitoring unit comprises a first vehicle having means for exerting seismic excitations to said monitored dam and a second vehicle having means to receive seismic wave samples from the deployed sensors and to transfer them via a wireless link to said analytical center.

In a further possible embodiment of the dam evaluation system according to the present invention the evaluation unit of said analytical center has access to a first database storing the measured dam parameters of a plurality of dams and a second database storing the historic evaluation results provided by the evaluation unit for said plurality of dams.

In a still further possible embodiment of the dam evaluation system according to the present invention the evaluation unit has access to an analytical model of the monitored dam.

In a further possible embodiment of the dam evaluation system according to the present invention the evaluation unit supplies the comparison result to a decision unit which decides whether the monitored dam is in an uncritical or critical state.

In a further possible embodiment of the dam evaluation system according to the present invention the decision unit outputs a warning if the monitored dam is found to be in a critical state.

In a further possible embodiment of the dam evaluation system according to the present invention the set of similar dams is selected on the basis of structural dam parameters of the dams being similar to structural dam parameters of the monitored dam.

In a further possible embodiment of the dam evaluation system according to the present invention the structural dam parameters comprise a dam type, a dam material, a dam geometry, and a dam age.

In a still further possible embodiment of the dam evaluation system according to the present invention the analytical cen ter has access to a third database storing data of failed or broken dams and environmental data at the time before and during the occurrence of the dam failure.

In a still further possible embodiment of the dam evaluation system according to the present invention the environmental data comprises water level data and/or weather data.

The above object is also solved by a method for evaluating a dam state of a dam comprising the features of claim 11.

The present invention provides according to this aspect a method for evaluating a dam state of a dam comprising the steps of:
exerting excitation to the monitored dam;
measuring excitation response parameters by sensors deployed at the monitored dam;
comparing the measured excitation response parameters of the monitored dam with historic excitation response parameters of this monitored dam and with excitation response parameters of a selected set of similar dams to evaluate the dam state of the monitored dam.

In a further possible embodiment of the method according to the present invention, a set of similar dams is selected on the basis of structural dam parameters of dams being similar to structural dam parameters of the monitored dam.

In a possible embodiment of the method according to the present invention the structural dam parameters of a selected set of similar dams does comprise a dam type, a dam material, a dam geometry and a dam age.

Further advantages and improvements of the present invention are listed in the dependent claims.

In the following embodiments of the method and apparatus for evaluating a dam state of a dam are explained in more detail with reference to the enclosed figures.
- Fig. 1: shows a diagram for illustrating a general structure of a distributed dam evaluation system for evaluating a dam state of a dam according to a first aspect of the present invention;
- Fig. 2: shows a block diagram of a possible embodiment of a dam evaluation system according to the first aspect of the present invention;
- Fig. 3: shows a side view of a possible embodiment of a mobile dam monitoring unit on a dam to be monitored according to a further aspect of the present invention;
- Fig. 4: shows a cross-sectional view of a monitored dam on which a mobile dam monitoring unit according to an aspect of the present invention is positioned;
- Fig. 5: shows a block diagram of an analytical center.

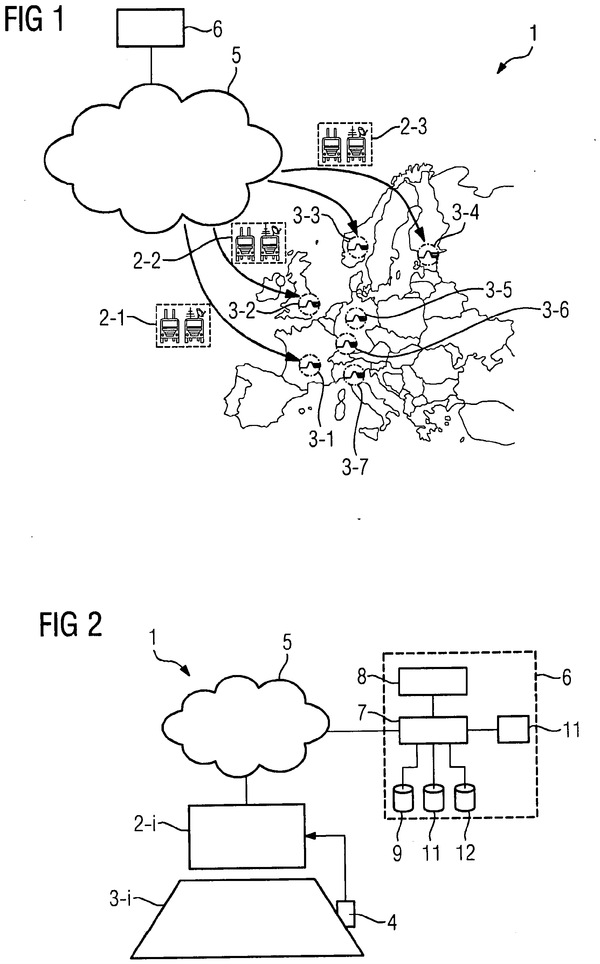

As can be seen in Fig. 1, the dam evaluation system 1 for evaluating a dam state of a dam according to a first aspect of the present invention is a distributed evaluation system which can evaluate dam states of dams 3 located in various countries. The distributed dam evaluation system 1 can be used to monitor a plurality of dams 3-i as illustrated in Fig. 1. In the shown example mobile monitoring units 2-1, 2-2, 2-3 can for instance be positioned at monitored dams 3-1, 3-2, 3-3 and can later, if necessary, be moved to other dams 3-i to be monitored. In a possible embodiment, each monitoring unit 2-i can comprise a first vehicle and a second vehicle. The first vehicle VH1 comprises means for exerting seismic excitation to the monitored dam 3-i and the second vehicle VH2 comprises means to receive seismic wave samples from the deployed sensors 4 and to transfer the seismic wave samples via a wireless link to at least one analytical center 6 of the dam evaluation system 1. Measurements comprising the excitation response parameters of the monitored dam 3-i can in a possible embodiment be transferred via a wireless link to the analytical center 6 using public data or telephone networks 5 and/or satellite connections. The analytical center 6 can be located at a fixed location, for instance somewhere in Europe. The analytical center 6 of the distributed evaluation system 1 has an evaluation unit 7 which is adapted to compare the received excitation response parameters of a monitored dam 3-i with historic evaluation response parameters of the same dam and with historic excitation response parameters of a selected set of similar dams stored in databases of the dam evaluation system 1.

Fig. 2 shows a possible architecture of a distributed dam evaluation system 1 according to the first aspect of the present invention in more detail. The mobile dam monitoring unit 2-i can be positioned on a monitored dam 3-i and can receive data from sensors 4-i deployed at the dam 3-i to be monitored. These sensors 4-i are mostly deployed on the surface of the dam 3-i to be monitored. The sensors 4-i measure excitation response parameters of the respective dam 3-i. The mobile dam monitoring unit 2-i is adapted to exert excitations to the monitored dam 3-i and to receive the excitation response parameters of the monitored dam 3-i from the deployed sensors 4-i. The mobile dam monitoring unit 2-i transfers the received excitation response parameters measured by the sensors 4-i via a network 5 to an analytical center 6 as illustrated in Fig. 2. The analytical center 6 comprises an evaluation unit 7 having one or several processors adapted to compare the received excitation response parameters of the monitored dam 3-i with historic evaluation response parameters of the same dam 3-i and with historic excitation response parameters of a selected set of similar dams 3-j stored in databases of the dam evaluation system. The evaluation unit 7 of the analytical center 6 has in the shown embodiment access to an analytical model AM of the monitored dam 3-i stored in a memory 8 as illustrated in Fig. 2. The evaluation unit 7 has further access to a first database 9 storing the measured dam parameters of a plurality of dams 3-i. The evaluation unit 7 has further access to a second database 10 storing the historic evaluation results provided by the evaluation unit 7 for the plurality of dams 3-i. In the shown embodiment of Fig. 2 the evaluation unit 7 applies the comparison result to a decision unit 11 which decides whether the monitored dam 3-i is in an uncritical or in a critical state. In a possible embodiment the decision unit 11 can output a warning if the monitored dam 3-i is found to be in a critical state. Further, the decision unit 11 can trigger further actions to be taken if a monitored dam is found to be in a critical state. For instance, the decision unit 11 can control flooding gates to reduce the water pressure on the monitored dam 3-i if the monitored dam is found to be in a critical state.

A set of similar dams being similar to the monitored dam 3-i is selected in a possible embodiment on the basis of structural dam parameters of the monitored dams being similar to structural dam parameters of the monitored dam 3-i. These structural dam parameters can comprise a dam type, a dam material, a dam geometry and a dam age of the respective dam. For instance, a dam type can indicate whether the monitored dam is a dam against flooding by the sea or by a river. Dam material can as a structural parameter of the dam indicate whether the respective dam is for instance made of earth, clay or concrete. The dam geometry can indicate inclination angles of the respective dam towards water and towards land. Further, the dam geometry indicates in a possible embodiment the length, height and width of the respective dam. The dam age indicates as a structural dam parameter how long the respective dam has been used and/or when the last maintenance was done. Other structural dam parameters can be provided as well, for instance whether the surface of the dam is covered by grass or the like.

In a further possible embodiment, the analytical center 6 can have an access to a third database 12 which stores data of failed or broken dams monitored in the past and storing environmental data at the time before and during the occurrence of the respective dam failure. The environmental data stored in the third database 12 can comprise for instance water level data and weather data at the time before and during the occurrence of the dam failure of the monitored dam. In this embodiment the set of similar dams is selected not only on the basis of the structural dam parameters of dams having similar structural dam parameters as the monitored dam but also on the basis of environmental data. In a possible embodiment dams are selected which are failed or broken under similar environmental circumstances. In a possible embodiment the mobile dam monitoring unit 2-i does not only comprise sensors which monitor or measure excitation response parameters but also sensors which measure environmental data such as temperature and wind pressure and/or water level at the respective monitored dam.

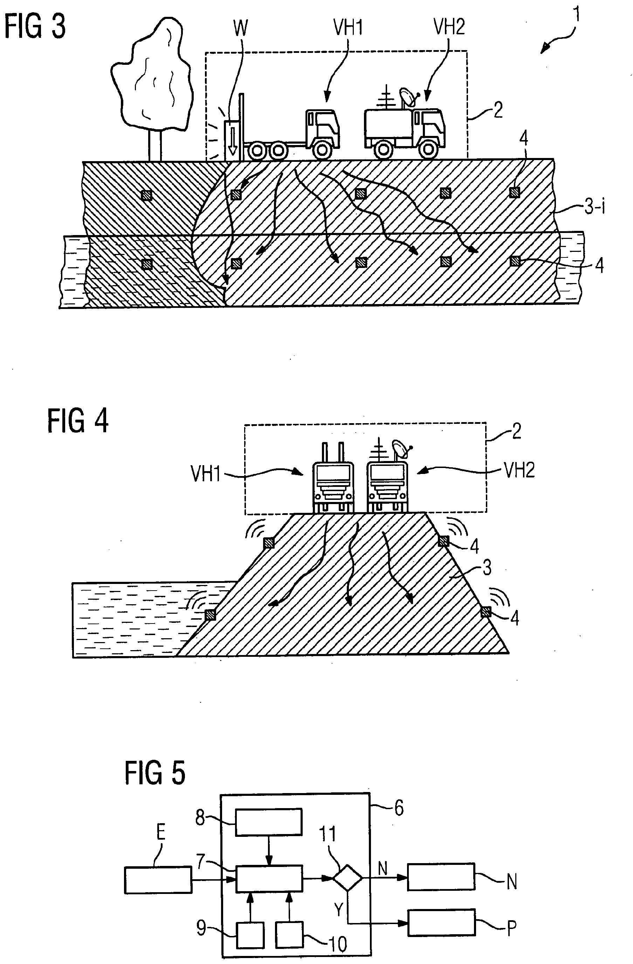

Fig. 3 shows a side view of a mobile dam monitoring unit 2-i positioned on the surface of a dam 3-i to be monitored. In the shown embodiment the mobile monitoring unit 2-i comprises a first and a second vehicle VH1, VH2. The first vehicle VH1 comprises means for exerting seismic excitation to said monitored dam 3-i. The second vehicle VH2 comprises means to receive seismic wave samples from the deployed sensors 4-i and to transfer them via a wireless link to the analytical center 6. A plurality of sensors 4-i can be located in a vicinity of the mobile dam monitoring unit 2-i. The first vehicle VH1 is used for transportation of a standard weight W. This standard weight W can fall on the surface of the monitored dam 3-i to generate seismic shock waves. The other vehicle VH2 of the mobile dam monitoring unit 2-i is used for collection of data transmitted by the deployed sensors 4-i which are provided for measuring direct and refracted seismic waves caused by the falling weight W. In a possible embodiment the deployed sensors 4-i are also transportable and can be used for monitoring various dams 3-i.

Vibration tests using the defined falling weight W have the advantage that it is possible to measure parameters of the subsoil layers. Consequently, it is possible to detect also soil changes beneath the surface of the monitored dam 3-i. The vibration test helps to determine changes of soil parameters. Direct and refracted seismic waves are recorded by the deployed sensors 4-i. The sensors 4-i can comprise three-dimensional geophones which are located in predefined arrays near the dam surface. The wave velocity does increase with depth corresponding to the geology and increasing soil consolidation. A low velocity does normally indicate a very soft sediment within the dam, for example mud.

The vibration tests can be carried out on a regular basis depending on the importance of the respective dam 3-i to be monitored and depending on environmental changes.

Fig. 4 shows a cross-sectional view of a monitored dam on which a mobile dam monitoring unit 2-i comprising the first and second vehicle VH1, VH2 is positioned. The falling weight W generates seismic shock waves which are detected by the sensors 4-i which are located mostly on the surface of the monitored dam 3-i and which transmit the received excitation response parameters to the second vehicle VH2 of the mobile dam monitoring unit 2-i. The second vehicle VH2 can relay the received data to the remote analytical center 6 via a network 5. The use of two different vehicles VH1, VH2 allows more flexibility. The first vehicle VH1 comprises the falling weight W to exert seismic excitations of the monitored dam 3-i. The second vehicle VH2 comprises technical means to receive seismic wave samples from the sensors 4-i and to transfer these samples via a wireless link, for instance by means of a satellite, to the analytical center 6. In a possible embodiment the second vehicle VH2 can also comprise processing means for pre-processing the received data from the sensors. In a possible embodiment the mobile dam monitoring unit 2-i can also receive data from sensors which collect environmental data such as temperature or water level data of the water pressing against the monitored dam 3-i. The recorded seismic wave samples can be relayed by the second vehicle VH2 along with the environmental data in a dataset to the evaluation unit 7 of the analytical center 6. After completion of the measuring the deployed sensors 4-i can be gathered and the mobile dam monitoring unit 2-i can move to another dam 3-i to be monitored. In a possible embodiment the mobile dam monitoring unit 2-i comprises a GPS module which detects the exact geographical position where the measurement of the excitation response parameters at the dam 3-i took place. These coordinates can also be relayed by the second vehicle VH2 of the mobile dam monitoring unit 2-i to the remote evaluation unit 7 of the analytical center 6.

Fig. 5 shows a block diagram of a possible embodiment of a dam evaluation system according to the present invention. In the shown embodiment current measurement values E of the current measurement at a monitored dam 3-i are read from a plurality of sensors 4-i and input to the evaluation unit 7. The evaluation unit 7 can comprise means for conducting a comparison of the received current measurement values with historic measurement values taken from a database. These historic measurement values have been determined by previous measurements performed at the same or different dams which are located in the same or other regions. The evaluation unit 7 has also access to a memory storing an analytical model AM of the respective dam 3-i. In a possible embodiment the evaluation unit 7 of the analytical center 6 has access to the first database 9 storing the measured dam parameters of a plurality of dams including the current dam 3-i to be monitored. The evaluation unit 7 can further has access to a second database 10 storing the historic evaluation results provided in the past by the evaluation unit 7 for the plurality of dams 3-i (knowledge database). The evaluation unit 7 conducts a comparison of the current measurement values E received from the mobile dam monitoring unit 2-i with historic values taken from database 9 and the knowledge database 10. The knowledge databases 10 can be filled with historical evaluation results of similar dams which have been evaluated by the distributed dam evaluation system 1 in the past. The evaluation unit 7 is adapted to compare the received excitation response parameters or measurement values of the monitored dam 3-i with the historic evaluation response parameters of the same dam 3-i and with historic excitation response parameters of a selected set of similar dams 3-j stored in the databases 9, 10 of the dam evaluation system 1. The monitored dam 3-i such as shown in Figs. 3, 4 is analyzed taken into account the historic excitation response parameters of itself and historic excitation response parameters of similar dams. A similar dam is a dam having similar structural dam parameters comprising inter alia a dam type, a dam material, a dam geometry and a similar dam age. The evaluation unit 7 can perform in a possible embodiment an estimation of result overlapping with historical results by using the analytical dam model AM stored in the memory 8. The evaluation unit 7 can perform a comparison of monitoring results over a set of similar dams. The knowledge database 10 can be used for improving and adapting expert system solutions. In the embodiment shown in Fig. 5 the evaluation unit 7 supplies the comparison results to a decision unit 11 which can decide whether the monitored dam 3-i is in an uncritical state or in a critical state. In a possible embodiment the decision unit can output a positive result P if the monitored dam 3-i is in an uncritical and output a negative result N if the dam 3-i is in a critical state.

The dam state of the monitored dam 3-i can be displayed to a person such as an engineer at the analytical center 6. If the monitored dam 3 is in a critical state, the decision unit 11 can output a warning and/or trigger further actions in view of the critical state of the monitored dam 3-i such as opening flooding gates to reduce the water pressure on the monitored dam 3-i.

In a possible embodiment the analytical center 6 can also comprise a control unit which sends control signals via the network 5 to actuators deployed at the monitored dam. These actuators can for instance open flooding: gates to uninhabited areas to reduce the water pressure on a dam being found to be in a critical state. Further, if a dam is found by the decision unit 11 to be in a critical state, the analytical center 6 can in a possible embodiment send automatically a corresponding warning signal via the network 5 to inspection personnel of the dam owner indicating that a dam 3-i is in a critical state. For instance, in this way an inspection person driving in one of the vehicles of the dam monitoring unit 2-i can be informed that the analysis of the monitored dam 3-i has generated the negative result N that this dam 3-i is in a critical state. After receipt of this information the inspection person drives to the critical dam in the vehicle of the mobile monitoring unit 2-i and leaves the vehicle for a close inspection of the critical dam. In this embodiment, a person at the site of the observed dam can be informed in real time that the monitored dam is in a critical state so that a visual inspection of the dam 3-i by a person at the respective site can be performed immediately.

In a possible embodiment of the dam evaluation system 1 according to the present invention the dam evaluation results provided by the evaluation unit 7 can also be transferred to a dam owner of the monitored dam. The transferred information data can include general evaluation data of the dam state and in case of an emergency a request for additional deeper dam examination. Further, in a possible embodiment the information can include expert system solutions as proposals for further actions to be taken by the dam owner.

With the dam evaluation system 1 according to the present invention it is possible to cover a large land area with a plurality of dams. The use of a mobile monitoring unit 2-i allows to monitor a plurality of dams in a large region or country. The dam evaluation system 1 according to the present invention uses an active test approach. With the dam evaluation system 1 according to the present invention it is possible to monitor possible dam body damages continuously and to detect critical damages or dam states at an early stage. By using a standard measuring methodic, in particular by using defined input-source, for instance a standard weight W, it is possible to get a correct interpretation of the different recorded responses at the different dams or dikes. With the dam evaluation system 1 according to the present invention it is not necessary to make a full investigation of the dike body structure every time. By comparing the measurements with the results of previous tests, the dam evaluation system 1 can detect existing internal changes within the dike structure which can reduce the dike stability of the respective dam. The evaluation unit 7 of the analytical center 6 performs an estimation of results overlapping with historical results by using the analytical dam model AM and by comparing the monitoring results over a set of monitoring results of similar dams.

With the dam evaluation system 1 according to the present invention it is possible to gain additional information about the dike structure for analysis. The data for analysis can be received on demand. The dam evaluation system 1 has the ability to provide clear interpretation results and to detect dike damages which cannot be detected by using only passive sensor measurements. A dam monitoring unit 2-i can be used by a plurality of different dikes or dams located in the same area. The necessary equipment, in particular the mobile dam monitoring unit 2-i, can be rented by a dam owner so that there is no need for the dam owner to have its own monitoring instruments or monitoring equipment.

If a severe damage of a monitored dam 3-i is detected the corresponding detection result can also be stored in a database of the dam evaluation system 1. By using an expert system and the permanent growing knowledge database 10 it is also possible to give advices to a dam owner for improved maintenance of existing dams as well as for planning dams in the future.

Further possible embodiments of the dam evaluation system 1 according to the present invention are possible. In a possible embodiment, the decision unit 11 does not only differentiate between an uncritical or a critical state but can indicate other states of the respective dam. Further, it is possible that the evaluation system 1 can differentiate between different states of different layers of the monitored dam 3-i. For instance, a first basic layer consisting of a first dam material might be in an uncritical state, whereas a second layer located over the first basic layer can be in a critical state or vice versa. With the evaluation of the seismic wave samples it is possible to analyze different layers.

With the evaluation of the excitation response parameters using seismic shock waves it is possible to generate state information for different layers beneath the surface of the dike or dam. Each dam 3-i can comprise several layers made of different materials. With the dam evaluation system 1 according to the present invention it is possible to evaluate also different dam layer states of different layers of the same dam.

In the embodiment shown in Fig. 2 the evaluation unit 7 is provided at a remote analytical center 6. In an alternative embodiment the evaluation unit 7 can also be provided in the mobile dam monitoring unit 2-i.

In a further possible embodiment of the dam evaluation system 1 according to the present invention, the position of the mobile dam monitoring unit 2-i can be adjusted by a control unit of the mobile dam monitoring unit 2-i or by a control unit within the analytical center 6 depending on the received excitation response parameters and the received seismic wave samples of the deployed sensors 4-i. For instance, if a critical state of a dam or a layer of the respective dam is detected, the position of the mobile monitoring unit 2-i can be changed and a second measurement can take place to confirm that the monitored dam or the respective dam layer is in a critical state. The position of the mobile dam monitoring unit 2-i can be adjusted with the help of the coordinates provided by the GPS module to perform a measurement at predefined distances, for instance every hundred meters. Accordingly, under normal circumstances, for each dam 3-i a plurality of recorded sets of excitation response parameters is recorded and transferred to the analytical center 6 to indicate the dam state at different positions along the length of the dam. In this way, a dam state profile along its length can be generated and evaluated and compared with other dams having a similar geometry.

## Claims

1. A dam evaluation system (1) for evaluating a dam state of a dam (3), comprising
a) at least one mobile dam monitoring unit (2) adapted to exert excitations to a monitored dam (3) and to transfer excitation response parameters of the dam (3) measured by sensors (4) deployed at the monitored dam (3) to an analytical center (6) of said dam evaluation system (1);
b) said dam evaluation system (1) having an evaluation unit (7);
**characterized in that**
c) said dam evaluation unit (7) is adapted to compare the received excitation response parameters of the monitored dam (3) with historic excitation response parameters of the same dam (3) and with historic excitation response parameters of a selected set of similar dams (3) stored in databases (9, 10) of said dam evaluation system (1).

2. The dam evaluation system according to claim 1, wherein said mobile dam monitoring unit (2) comprises a first vehicle (VH1) comprising means for exerting seismic excitations to said monitored dam (3) and
a second vehicle (VH2) comprising means to receive seismic wave samples from the deployed sensors (4) and to transfer them via a wireless link to said analytical center (6).

3. The dam evaluation system according to claim 1 or 2,
wherein said evaluation unit (7) of said analytical center (6) has access to a first database (9) storing the measured dam parameters of a plurality of dams and
a second database (10) storing the historic evaluation results provided by the evaluation unit (7) for said plurality of dams.

4. The dam evaluation system according to one of the preceding claims 1 to 3, wherein the evaluation unit (7) has access to an analytical model of the monitored dam (3).

5. The dam evaluation system according to one of the preceding claims 1 to 4, wherein the evaluation unit (7) supplies the comparison result to a decision unit (11) which decides whether the monitored dam (3) is in an uncritical or critical state.

6. The dam evaluation system according to claim 5, wherein the decision unit (11) outputs a warning if the monitored dam (3) is found to be in a critical state.

7. The dam evaluation system according to one of the preceding claims 1 to 6, wherein the set of similar dams is selected on the basis of structural dam parameters of dams being similar to structural dam parameters of the monitored dam (3).

8. The dam evaluation system according to claim 7, wherein the structural dam parameters comprise
a dam type,
a dam material,
a dam geometry, and
a dam age.

9. The dam evaluation system according to claim 3, wherein the analytical center (6) has access to a third database (12) storing data of failed or broken dams and environmental data at the time before and during the occurrence of the dam failure.

10. The dam evaluation system according to claim 9, wherein the environmental data comprises water level data and/or weather data.

11. A method for evaluating a dam state of a dam, comprising the steps of:
a) exerting excitation to the monitored dam (3);
b) measuring excitation response parameters by sensors (4) deployed at the monitored dam (3);
**characterized by** the step of:
c) comparing the measured excitation response parameters of the monitored dam (3) with historic excitation response parameters of this monitored dam (3) and with excitation response parameters of a selected set of similar dams to evaluate the dam state of the monitored dam (3).

12. The method according to claim 11, wherein a set of similar dams is selected on the basis of structural dam parameters of dams being similar to structural dam parameters of the monitored dam (3).

13. The method according to claim 12, wherein the structural dam parameters comprise a dam type, a dam material, a dam geometry and/or a dam age.

## Patentansprüche

1. Dammbeurteilungssystem (1) zum Beurteilen eines Dammzustands eines Damms (3), umfassend:
a) mindestens eine mobile Dammüberwachungseinheit (2), die geeignet ist zum Ausüben von Anregungen auf einen überwachten Damm (3) und zum Übertragen der Anregungsantwortparameter des Damms (3), die mithilfe von Sensoren (4) gemessen werden, die auf dem überwachten Damm (3) angebracht sind, zu einem Analysezentrum (6) des Dammbeurteilungssystems (1);
b) wobei das Dammbeurteilungssystem (1) eine Beurteilungseinheit (7) aufweist;
**dadurch gekennzeichnet, dass**
c) die Dammbeurteilungseinheit (7) geeignet ist zum Vergleichen der empfangenen Anregungsantwortparameter des überwachten Damms (3) mit historischen Anregungsantwortparametern des gleichen Damms (3) und mit historischen Anregungsantwortparametern einer ausgewählten Gruppe ähnlicher Dämme (3), die in Datenbanken (9, 10) des Dammbeurteilungssystems (1) gespeichert sind.

2. Dammbeurteilungssystem nach Anspruch 1, wobei die mobile Dammüberwachungseinheit (2) umfasst: ein erstes Fahrzeug (VH1), das ein Element zum Ausüben von seismischen Anregungen auf den überwachten Damm (3) umfasst, und
ein zweites Fahrzeug (VH2), das ein Element zum Empfangen von seismischen Wellenabtastwerten von den angebrachten Sensoren (4) und zum Übertragen derselben über eine drahtlose Verbindung zu dem Analysezentrum (6).

3. Dammbeurteilungssystem nach Anspruch 1 oder 2, wobei die Beurteilungseinheit (7) des Analysezentrums (6) Zugriff auf eine erste Datenbank (9) hat, in der die gemessenen Dammparameter einer Vielzahl von Dämmen gespeichert sind, und auf eine zweite Datenbank (10) hat, in der die historischen Beurteilungsergebnisse gespeichert sind, die durch die Beurteilungseinheit (7) für die Vielzahl von Dämmen bereitgestellt werden.

4. Dammbeurteilungssystem nach einem der vorhergehenden Ansprüche 1 bis 3, wobei die Beurteilungseinheit (7) Zugriff auf ein analytisches Modell des überwachten Damms (3) hat.

5. Dammbeurteilungssystem nach einem der vorhergehenden Ansprüche 1 bis 4, wobei die Beurteilungseinheit (7) die Vergleichsergebnisse an eine Entscheidungseinheit (11) liefert, die entscheidet, ob sich der überwachte Damm (3) in einem unkritischen oder einem kritischen Zustand befindet.

6. Dammbeurteilungssystem nach Anspruch 5, wobei die Entscheidungseinheit (11) eine Warnung ausgibt, wenn herausgefunden wird, dass sich der überwachte Damm (3) in einem kritischen Zustand befindet.

7. Dammbeurteilungssystem nach einem der vorhergehenden Ansprüche 1 bis 6, wobei die Gruppe von ähnlichen Dämmen auf der Grundlage von strukturellen Dammparametern von Dämmen ausgewählt wird, die ähnlich wie die strukturellen Dammparameter des überwachten Damms (3) sind.

8. Dammbeurteilungssystem nach Anspruch 7, wobei die strukturellen Dammparameter umfassen:
einen Dammtyp,
ein Dammmaterial,
eine Dammgeometrie und
ein Dammalter.

9. Dammbeurteilungssystem nach Anspruch 3, wobei das Analysezentrum (6) Zugriff auf eine dritte Datenbank (12) hat, in der Daten von schadhaften oder gebrochenen Dämmen und Umgebungsdaten zu Zeitpunkten vor und während des Auftretens der Dammschäden gespeichert sind.

10. Dammbeurteilungssystem nach Anspruch 9, wobei die Umgebungsdaten Wasserstandsdaten und/oder Wetterdaten umfassen.

11. Verfahren zum Beurteilen eines Dammzustands eines Damms, das die folgenden Schritte umfasst:
a) Ausüben von Anregungen auf den überwachten Damm (3);
b) Messen der Anregungsantwortparameter mithilfe von Sensoren (4), die an dem überwachten Damm (3) angebracht sind;
**gekennzeichnet durch** den folgenden Schritt:
c) Vergleichen der gemessenen Anregungsantwortparameter des überwachten Damms (3) mit historischen Anregungsantwortparametern dieses überwachten Damms (3) und mit Anregungsantwortparametern einer ausgewählten Gruppe ähnlicher Dämme, um den Dammzustand des überwachten Damms (3) zu beurteilen.

12. Verfahren nach Anspruch 11, wobei eine Gruppe von ähnlichen Dämmen auf der Grundlage von strukturellen Dammparametern von Dämmen ausgewählt wird, die ähnlich wie die strukturellen Dammparameter des überwachten Damms (3) sind.

13. Verfahren nach Anspruch 12, wobei die strukturellen Dammparameter einen Dammtyp, ein Dammmaterial, eine Dammgeometrie und/oder ein Dammalter umfassen.

## Revendications

1. Système d'évaluation de barrage (1) pour évaluer l'état d'un barrage (3), comprenant
a) au moins une unité mobile de surveillance de barrage (2) adaptée pour exercer des excitations sur un barrage surveillé (3) et pour transférer les paramètres de réponse d'excitation du barrage (3) mesurés par des capteurs (4) déployés sur le barrage surveillé (3) vers un centre analytique (6) dudit système d'évaluation de barrage (1) ;
b) ledit système d'évaluation de barrage (1) comprenant une unité d'évaluation (7) ;
**caractérisé en ce que** :
c) ladite unité d'évaluation de barrage (7) est adaptée pour comparer les paramètres de réponse d'excitation reçus du barrage surveillé (3) aux paramètres de réponse d'excitation historiques du même barrage (3) et aux paramètres de réponse d'excitation historiques d'un ensemble sélectionné de barrages similaires (3) stockés dans des bases de données (9, 10) dudit système d'évaluation de barrage (1).

2. Système d'évaluation de barrage selon la revendication 1, dans lequel ladite unité mobile de surveillance de barrage (2) comprend un premier véhicule (VH1) comprenant des moyens pour exercer des excitations sismiques sur ledit barrage surveillé (3), et
un second véhicule (VH2) comprenant des moyens pour recevoir des échantillons d'ondes sismiques provenant des capteurs déployés (4) et pour les transférer par l'intermédiaire d'une liaison sans fil vers ledit centre analytique (6).

3. Système d'évaluation de barrage selon la revendication 1 ou la revendication 2, dans lequel ladite unité d'évaluation (7) dudit centre analytique (6) a accès à une première base de données (9) stockant les paramètres de barrage mesurés d'une pluralité de barrages et à une deuxième base de données (10) stockant les résultats historiques d'évaluation fournis par l'unité d'évaluation (7) pour ladite pluralité de barrages.

4. Système d'évaluation de barrage selon l'une des revendications précédentes 1 à 3, dans lequel l'unité d'évaluation (7) a accès à un modèle analytique du barrage surveillé (3).

5. Système d'évaluation de barrage selon l'une des revendications précédentes 1 à 4, dans lequel l'unité d'évaluation (7) fournit le résultat de la comparaison à une unité de décision (11) qui décide si le barrage surveillé (3) est dans un état critique ou non critique.

6. Système d'évaluation de barrage selon la revendication 5, dans lequel l'unité de décision (11) émet un avertissement si le barrage surveillé (3) se trouve dans un état critique.

7. Système d'évaluation de barrage selon l'une des revendications précédentes 1 à 6, dans lequel l'ensemble de barrages similaires est sélectionné sur la base de paramètres structurels de barrage de barrages similaires aux paramètres structurels de barrage du barrage contrôlé (3).

8. Système d'évaluation de barrage selon la revendication 7, dans lequel les paramètres structurels de barrage comprennent :
le type du barrage,
le matériau du barrage,
la géométrie du barrage, et
l'âge du barrage.

9. Système d'évaluation de barrage selon la revendication 3, dans lequel le centre analytique (6) a accès à une troisième base de données (12) stockant des données de barrages en panne ou s'étant rompus et des données environnementales à la fois avant et pendant la survenue de la rupture du barrage.

10. Système d'évaluation de barrage selon la revendication 9, dans lequel les données environnementales comprennent des données de niveau d'eau et/ou des données météorologiques.

11. Procédé pour évaluer l'état d'un barrage, comprenant les étapes suivantes :
a) exercer une excitation sur le barrage surveillé (3) ;
b) mesurer des paramètres de réponse d'excitation par des capteurs (4) déployés sur le barrage surveillé (3) ;
**caractérisé par** l'étape suivante :
c) comparer les paramètres de réponse d'excitation mesurés du barrage surveillé (3) aux paramètres de réponse d'excitation historiques de ce barrage surveillé (3) et aux paramètres de réponse d'excitation d'un ensemble sélectionné de barrages similaires pour évaluer l'état du barrage surveillé (3).

12. Procédé selon la revendication 11, dans lequel un ensemble de barrages similaires est sélectionné sur la base de paramètres de barrage structurels de barrages similaires aux paramètres de barrage structurels du barrage surveillé (3).

13. Procédé selon la revendication 12, dans lequel les paramètres structurels de barrage comprennent le type du barrage, le matériau du barrage, la géométrie du barrage et/ou l'âge du barrage.
